# EUROPEAN PATENT APPLICATION

(11) **EP 4 525 357 A1**
(43) Date of publication of application: **19.03.2025**
(21) Application number: 23909194.5
(22) Date of filing: 16.08.2023
(51) Int. Cl.: H04L 9/32

(54) **SIGNATURE AUTHENTICATION METHOD AND APPARATUS**

(30) Priority: 26.12.2022 CN 202211673945
(71) Applicant: Alipay (Hangzhou) Information Technology Co., Ltd., Hangzhou, Zhejiang 310000 (CN)
(72) Inventor: ZHANG, Wanqiao, Hangzhou, Zhejiang 310000 (CN); HUANG, Lin, Hangzhou, Zhejiang 310000 (CN); LIU, Yujia, Hangzhou, Zhejiang 310000 (CN)
(74) Representative: Fish & Richardson P.C.
(86) International application number: PCT/CN2023/113226
(87) International publication number: WO 2024/139253

(57) **Abstract**

Embodiments of this specification provide signature authentication methods and apparatuses that are applied to a server. The server performs signature authentication on a terminal device. In the signature authentication method, a service private key required for signature authentication is embedded in a trusted execution environment (TEE) of the terminal device in advance, the TEE verifies a biological feature entered by a user, and after the verification succeeds, the TEE completes a signature required by a signature authentication request. The method includes the following: The server receives a signature authentication request sent by the terminal device, determines whether the terminal device that sends the signature authentication request is a contaminated device, and in response to determining that the terminal device that sends the signature authentication request is a contaminated device, determines a dynamic signature parameter that needs to be used for the current signature authentication, re-authorizes the terminal device to enable verification permissions and notifies the terminal device to collect the dynamic signature parameter, receives a value of the dynamic signature parameter that is sent by the terminal device, and performs signature authentication based on the value of the dynamic signature parameter. The embodiments of this specification can improve the security of signature authentication.

## Description

### TECHNICAL FIELD

One or more embodiments of this specification relate to network communication technologies, and in particular, to signature authentication methods and apparatuses.

### BACKGROUND

With the development of Internet technologies, in many service scenarios, biological feature recognition has been used as an identity authentication manner, that is, biological features such as fingerprint information or facial recognition information of a user are used to replace a password manually entered by the user, such as a password in a digital/alphabetic form, to authenticate an identity of the user.

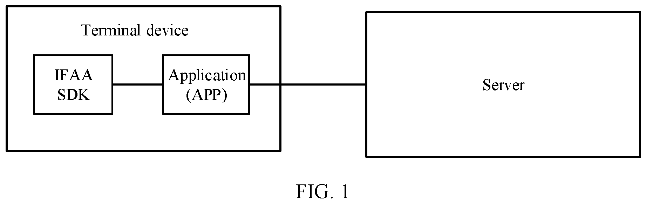

To ensure convenience, security, and credibility of using biological feature recognition as the identity authentication manner, a new signature authentication technology, referred to as Internet Finance Authentication Alliance (IFAA), has currently emerged. As shown in FIG. 1, in the new signature technology, a service private key is embedded in a trusted execution environment (TEE) of a terminal device such as a mobile phone in advance before delivery of the terminal device, and a client device and the TEE cooperate with each other to complete signing. In various service scenarios such as face authentication, the terminal device can perform signing based on the new signature authentication technology, and a server authenticates a signature. After the authentication succeeds, a service is provided.

However, a current signature authentication method is not secure enough.

### SUMMARY

One or more embodiments of this specification describe signature authentication methods and apparatuses, to improve the security of signature authentication.

According to a first aspect, a signature authentication method is provided, and is applied to a server. The server performs signature authentication on a terminal device. In the signature authentication method, a service private key required for signature authentication is embedded in a TEE of the terminal device in advance, the TEE verifies a biological feature entered by a user, and after the verification succeeds, the TEE completes a signature required by a signature authentication request. The method includes the following: receiving a signature authentication request sent by the terminal device; determining whether the terminal device that sends the signature authentication request is a contaminated device; if yes, determining a dynamic signature parameter that needs to be used for the current signature authentication; re-authorizing the terminal device to enable verification permissions, and notifying the terminal device to collect the dynamic signature parameter; receiving a value of the dynamic signature parameter that is sent by the terminal device; and performing signature authentication based on the value of the dynamic signature parameter.

The determining whether the terminal device that sends the signature authentication request is a contaminated device includes the following: obtaining model information of the terminal device or version information of a protocol used by the signature that is carried in the signature authentication request; and determining whether the obtained model information of the terminal device or the version information can be found in a pre-obtained blacklist, and if yes, determining that the terminal device that sends the signature authentication request is a contaminated device.

The determining a dynamic signature parameter that needs to be used for the current signature authentication includes the following: selecting, from a predetermined dynamic signature parameter library by using a random selection method or a one-by-one selection method, the dynamic signature parameter that needs to be used for the current signature authentication.

The dynamic signature parameter library includes a fingerprint ID, a device ID, an application APP package name, a service scenario, and a user ID.

The dynamic signature parameter library includes a parameter associated with a service.

The method further includes the following: setting a corresponding parameter sequence number for each parameter in the dynamic signature parameter library; and the notifying the terminal device to collect the dynamic signature parameter includes the following: sending a notification message to the terminal device, where a first field in the notification message includes a parameter sequence number corresponding to the dynamic signature parameter that needs to be used for the current signature authentication, and a second field in the notification message is used to indicate a length of the first field.

According to a second aspect, a signature authentication apparatus is provided and is applied to a server, and the server performs signature authentication on a terminal device. In the signature authentication method, a service private key required for signature authentication is embedded in a TEE of the terminal device in advance, the TEE verifies a biological feature entered by a user, and after the verification succeeds, the TEE completes a signature required by a signature authentication request; and the signature authentication apparatus includes the following: an authentication request receiving module, configured to receive a signature authentication request sent by the terminal device; a determining module, configured to determine whether the terminal device that sends the signature authentication request is a contaminated device; a dynamic signature parameter determining module, configured to determine, after it is determined that the terminal device that sends the signature authentication request is a contaminated device, a dynamic signature parameter that needs to be used for the current signature authentication; a verification restart module, configured to re-authorize the terminal device to enable verification permissions, and notify the terminal device to collect the dynamic signature parameter; and a re-authentication execution module, configured to receive a value of the dynamic signature parameter that is sent by the terminal device; and perform signature authentication based on the value of the dynamic signature parameter..

The verification restart module is configured to send a notification message to the terminal device, where a first field in the notification message includes a parameter sequence number corresponding to the dynamic signature parameter that needs to be used for the current signature authentication, and a second field in the notification message is used to indicate a length of the first field.

According to a third aspect, a computing device is provided, including a memory and a processor. The memory stores executable code, and when executing the executable code, the processor implements the method according to any one of the embodiments of this specification.

The signature authentication methods and apparatuses provided in the embodiments of this specification modify an existing signature authentication process. After receiving the signature authentication request sent by the terminal device, the server does not directly use inherent information such as a device ID carried in the signature authentication request to perform signature authentication, but first determines whether the terminal device that sends the signature authentication request is a contaminated device, where the contaminated device means that a service private key in a TEE of the terminal device has been disclosed. If the terminal device is a contaminated device, the signature authentication request is probably a signature authentication request initiated by an attacker by counterfeiting a signature after the service private key is disclosed. In this case, if signature authentication is still performed based on the inherent information such as the device ID carried in the signature authentication request in an existing technology, the attacker is authenticated successfully, and consequently, insecurity is caused to a service process. Therefore, in the embodiments of this specification, after it is determined that the terminal device is a contaminated device, signature authentication is not performed by using the inherent information such as the device ID carried in the signature authentication request, but a dynamic signature parameter that needs to be used for current signature authentication is redetermined. To be specific, first, signature authentication needs to be restarted, and second, instead of using the existing inherent information, the dynamic signature parameter is used, that is, parameters used for different signature authentication are different, and the parameters change dynamically. Generally, an attacker can steal only the signature, but cannot steal the value of the dynamic signature parameter, for example, cannot steal an application (APP) package name. Therefore, the server performs signature authentication based on the value of the dynamic signature parameter. If the value of the dynamic signature parameter, such as the APP package name, is a normal value that meets a current service scenario, the signature authentication succeeds, indicating that the current terminal device is a terminal device that performs a normal service. If the value of the dynamic signature parameter, such as the APP package name, is an abnormal value that does not meet the current service scenario, the signature authentication fails, indicating that the current terminal device is an attacker.

In addition, future adaptation will be diversified, and some models even fail to complete cooperation on key burning in the TEE. However, for the development of service scenarios, corresponding measures are also taken. Therefore, once some important private keys are disclosed, a great test is imposed on the security of the entire system. Therefore, a contamination degree detection function is added to this solution, and a sampling field is set to dynamically complete timely repair of a device type and a device vulnerability, so as to continue to maintain security and reliability properties.

### BRIEF DESCRIPTION OF DRAWINGS

To describe the technical solutions in embodiments of this specification or in an existing technology more clearly, the following briefly describes the accompanying drawings needed for describing the embodiments or the existing technology. Clearly, the accompanying drawings in the following descriptions show some embodiments of this specification, and a person of ordinary skill in the art can still derive other drawings from these accompanying drawings without creative efforts.
FIG. 1 is a schematic diagram illustrating a system architecture applied to one or more embodiments of this specification;
FIG. 2 is a flowchart illustrating a signature authentication method, according to one or more embodiments of this specification; and
FIG. 3 is a schematic structural diagram illustrating a signature authentication apparatus, according to one or more embodiments of this specification.

### DESCRIPTION OF EMBODIMENTS

With the application and adaptation of an emerging signature authentication method such as an Internet Finance Authentication Alliance (IFAA) protocol, a service private key required for signature authentication is burnt in TEEs of increasingly more terminal devices such as a mobile phone before delivery. However, due to an erroneous understanding by a third-party manufacturer, some vulnerabilities that are difficult to control and cannot be remedied are caused. For example, a test version is burnt by the third-party manufacturer, that is, a test interface/modulation interface is also burnt in a TEE of the terminal device. Consequently, an attacker can easily steal a service private key in the TEE through the test interface/modulation interface, thereby counterfeiting a signature and performing an attack.

The following describes solutions provided in this specification with reference to the accompanying drawings.

It is worthwhile to note first that, the terms used in the embodiments of this application are merely used to describe specific embodiments, and are not intended to limit this application. The terms "a", "said", and "the" of singular forms used in the embodiments of this application and the appended claims are also intended to include plural forms, unless otherwise specified in the context clearly.

To facilitate understanding of the methods provided in this specification, a system architecture involved in and applicable to this specification is described first. As shown in FIG. 1, the system architecture mainly includes two types of network nodes: a terminal device and a server.

The terminal device can include but is not limited to an intelligent mobile terminal, a smart household device, a network device, a wearable device, a smart medical device, a personal computer (PC), etc. An intelligent mobile device can include a mobile phone, a tablet computer, a notebook computer, a personal digital assistant (PDA), an Internet vehicle, etc. The smart household device can include a smart appliance device, such as a smart TV, a smart air conditioner, a smart water heater, a smart refrigerator, a smart air purifier, etc. The smart household device can further include a smart door lock, a smart socket, a smart light, a smart camera, etc. The network device can include a switch, a wireless access point (AP), a server, etc. The wearable device can include a smart watch, smart glasses, a smart band, a virtual reality device, an augmented reality device, a hybrid reality device (that is, a device that can support virtual reality and augmented reality), etc. The smart medical device can include a smart thermometer, a smart blood pressure monitor, a smart blood glucometer, etc.

The server is a server-end device of a provider that provides a network service, and can be a single server or a server group including multiple servers. The server is responsible for providing network services for various applications, such as security authentication, network service-level management, etc.

The terminal device includes a software development kit (SDK) of the IFAA and an application client device. The application client device can be applications (APP) of various types, and performs IFAA signature authentication by invoking the SDK of the IFAA.

It should be understood that a quantity of APPs, a quantity of SDKs of the IFAA, a quantity of terminal devices, and a quantity of servers in FIG. 1 are merely examples. Any quantity can be selected and disposed based on implementation needs.

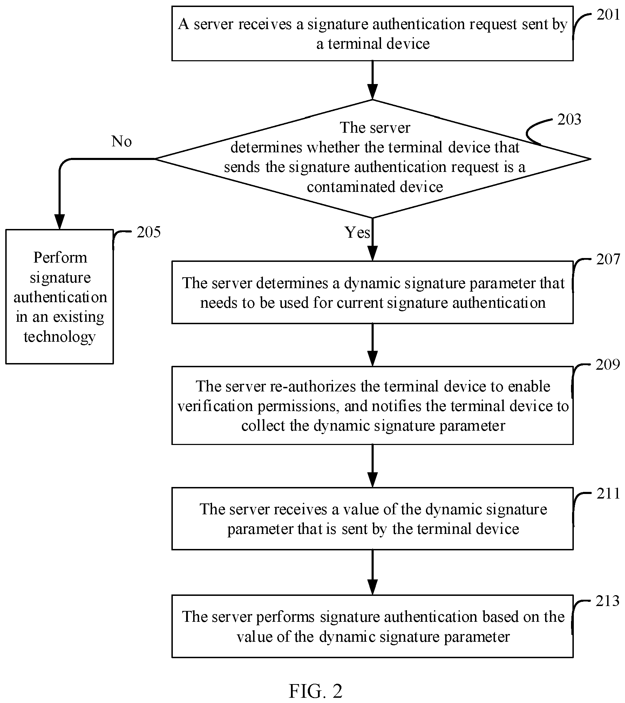

FIG. 2 is a flowchart illustrating a signature authentication method, according to one or more embodiments of this specification. The method is performed by a server. It can be understood that the method can alternatively be performed by any apparatus, device, platform, device cluster, etc. with computing and processing capabilities. As shown in FIG. 2, the method includes the following steps: Step 201: The server receives a signature authentication request sent by a terminal device.

Step 203: The server determines whether the terminal device that sends the signature authentication request is a contaminated device, and if yes, performs step 207, or otherwise, performs step 205

Step 205: Perform signature authentication in an existing technology, and end the current procedure.

Step 207: The server determines a dynamic signature parameter that needs to be used for current signature authentication.

Step 209: The server re-authorizes the terminal device to enable verification permissions, and notifies the terminal device to collect the dynamic signature parameter.

Step 211: The server receives a value of the dynamic signature parameter that is sent by the terminal device.

Step 213: The server performs signature authentication based on the value of the dynamic signature parameter.

It can be learned from the above-mentioned procedure shown in FIG. 2 that, in the embodiments of this specification, an existing signature authentication process is modified. After receiving the signature authentication request sent by the terminal device, the server does not directly use inherent information such as a device ID carried in the signature authentication request to perform signature authentication, but first determines whether the terminal device that sends the signature authentication request is a contaminated device, where the contaminated device means that a service private key in a TEE of the terminal device has been disclosed. If the terminal device is a contaminated device, the signature authentication request is probably a signature authentication request initiated by an attacker by counterfeiting a signature after the service private key is disclosed. In this case, if signature authentication is still performed based on the inherent information such as the device ID carried in the signature authentication request in the existing technology, the attacker is authenticated successfully, and consequently, insecurity is caused to a service process. Therefore, in the embodiments of this specification, after it is determined that the terminal device is a contaminated device, signature authentication is not performed by using the inherent information such as the device ID carried in the signature authentication request, but the dynamic signature parameter that needs to be used for the current signature authentication is redetermined. To be specific, first, signature authentication needs to be restarted, and second, instead of using the existing inherent information, the dynamic signature parameter is used, that is, parameters used for different signature authentication are different, and the parameters change dynamically. Generally, an attacker can steal only the signature, but cannot steal the value of the dynamic signature parameter, for example, cannot steal an application (APP) package name. Therefore, the server performs signature authentication based on the value of the dynamic signature parameter. If the value of the dynamic signature parameter, such as the APP package name, is a normal value that meets a current service scenario, the signature authentication succeeds, indicating that the current terminal device is a terminal device that performs a normal service. If the value of the dynamic signature parameter, such as the APP package name, is an abnormal value that does not meet the current service scenario, the signature authentication fails, indicating that the current terminal device is probably an attacker.

The process shown in FIG. 2 is described below with reference to a specific example.

First, for step 201, the server receives the signature authentication request sent by the terminal device.

Here, the terminal device can be an SDK that is invoked during initiation of a service procedure, such as a login procedure for logging in to a service system or a payment procedure for online shopping, so as to perform signature authentication in the service procedure. The signature authentication request initiated by the terminal device to the server carries biological information of a user on the terminal device side, such as a face image, a fingerprint, etc.

On the terminal device side, a service private key required for signature authentication is embedded in a TEE of the terminal device in advance, the TEE verifies a biological feature entered by the user, and after the verification succeeds, the TEE completes a signature required by the signature authentication request. In addition, a client device in the terminal device sends the signature authentication request that completes signing to the server, so that the server receives the signature authentication request sent by the terminal device.

Next, for step 203, the server determines whether the terminal device that sends the signature authentication request is a contaminated device, and if yes, performs step 207, or otherwise, performs step 205.

Here, if an attacker has stolen the service private key in the TEE of the terminal device through a test interface, a modulation interface, etc., the terminal device is a contaminated device. In actual service implementation, after the service private key in the TEE is disclosed, the server obtains a blacklist, and the blacklist stores information about all contaminated devices.

In actual service implementation, usually, a group of terminal devices of a same type are contaminated. Therefore, the blacklist can be set based on model information of the terminal device, and whether the terminal device that sends the signature authentication request is a contaminated device is determined based on the model information of the terminal device.

Certainly, usually, service private keys of a same version are disclosed. Therefore, the blacklist can also be set based on version information of a protocol used by the signature, such as version information of an IFAA protocol, and whether the terminal device that sends the signature authentication request is a contaminated device is determined based on the version information.

In other words, a process of step 203 can include the following: obtaining model information of the terminal device or version information that is carried in the signature authentication request; determining whether the obtained model information of the terminal device or the version information can be found in a pre-obtained blacklist; and if yes, determining that the terminal device that sends the signature authentication request is a contaminated device.

Step 205: The server performs signature authentication in the existing technology, and ends the current procedure.

Step 207: The server determines the dynamic signature parameter that needs to be used for the current signature authentication.

When step 207 is performed, because it has been determined that the terminal device that sends the signature authentication request is a contaminated device, the current signature authentication request is probably sent by an attacker by counterfeiting a signature. Therefore, in the embodiments of this specification, first, signature authentication needs to be restarted, and second, in subsequent signature authentication, existing inherent information is no longer used, but the dynamic signature parameter is used, that is, parameters used for different signature authentication are different, and the parameters change dynamically. Generally, an attacker can steal only the signature, but cannot steal a value of the dynamic signature parameter, such as an APP package name. Therefore, in step 207, the server determines the dynamic signature parameter that needs to be used for the current signature authentication.

A dynamic signature parameter library can be predetermined, the dynamic signature parameter library includes numerous dynamic signature parameters, and each dynamic signature parameter corresponds to one service need. In step 207, the dynamic signature parameter that needs to be used for the current signature authentication is determined based on a current service need.

Specifically, step 207 can include the following: selecting, from a predetermined dynamic signature parameter library by using a random selection method or a one-by-one selection method, the dynamic signature parameter that needs to be used for the current signature authentication. For example, the dynamic signature parameter library includes a parameter associated with a service.

In one or more embodiments of this specification, the dynamic signature parameter library includes a fingerprint ID, a device ID, an APP package name, a service scenario, a user ID, etc.

Therefore, in the embodiments of this specification, in step 207, for example, the APP package name can be dynamically selected as the dynamic signature parameter that needs to be used for the current signature authentication.

In one or more embodiments of this specification, the method further includes the following: predetermining a corresponding parameter sequence number for each parameter in the dynamic signature parameter library, for example, to the following form:
Parameter sequence number:
0x01: Fingerprint ID
0x02: Device ID
0x03: APP package name
0x04: Service scenario
0x05: User ID

In this way, in step 207, specifically, a parameter sequence number of the dynamic signature parameter that needs to be used for the current signature authentication can be determined.

Step 209: The server re-authorizes the terminal device to enable verification permission, and notifies the terminal device to collect the dynamic signature parameter.

A specific process of step 209 can include the following: The server sends a notification message to the terminal device, where a first field in the notification message includes the parameter sequence number corresponding to the dynamic signature parameter that needs to be used for the current signature authentication, and a second field in the notification message is used to indicate a length of the first field.

Here, in the embodiments of this specification, a signature authentication procedure is changed, and the terminal device does not know a quantity of dynamic signature parameters that the server requires the terminal device to collect and types of the dynamic signature parameters, that is, a parameter collected when the terminal device performs signature authentication becomes a variable byte. Therefore, to ensure correct execution of a service, the server can add the first field and the second field to the notification message. The second field is used to indicate the length of the first field, so as to notify the terminal device of a length of a field in a current dynamic signature parameter part, so that the terminal device knows a quantity of dynamic signature parameters that need to be collected. The first field is used to indicate the parameter sequence number corresponding to the dynamic signature parameter that needs to be used for the current signature authentication, so that the terminal device knows a type of the dynamic signature parameter that needs to be collected. It can be learned that, by using the first field and the second field, the terminal device can know the quantity of dynamic signature parameters that need to be collected and the types of the dynamic signature parameters.

Thereafter, after receiving a notification, the terminal device invokes a system function to collect the value of the corresponding dynamic signature parameter, such as an APP package name and/or a user ID, based on the first field and the second field, and then sends the collected value of the dynamic signature parameter to the server.

Next, for step 211, the server receives the value of the dynamic signature parameter that is sent by the terminal device.

Next, for step 213, the server performs signature authentication based on the value of the dynamic signature parameter.

In this way, in the signature authentication process, the server no longer uses an original fixed parameter to perform authentication, but changes the parameter used for authentication into a variable byte.

Here, if the server performs signature authentication based on the value of the dynamic signature parameter, and after the authentication succeeds, the server stores a signature relationship corresponding to a new device fingerprint.

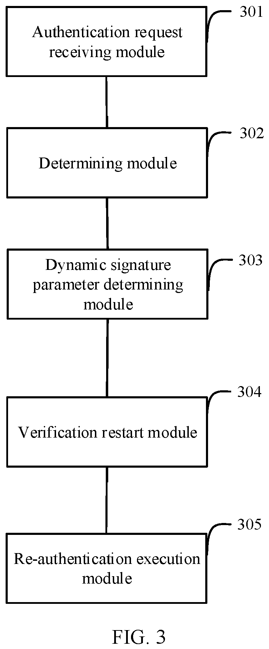

One or more embodiments of this specification further provide a signature authentication apparatus that is applied to a server, and the server performs signature authentication on a terminal device. On a terminal device side, a service private key required for signature authentication is embedded in a TEE of the terminal device, the TEE verifies a biological feature entered by a user, and after the verification succeeds, the TEE completes a signature required by a signature authentication request. In addition, a client device in the terminal device sends the signature authentication request that completes signing to the server. As shown in FIG. 3, the apparatus includes the following: an authentication request receiving module 301, configured to receive a signature authentication request sent by the terminal device; a determining module 302, configured to determine whether the terminal device that sends the signature authentication request is a contaminated device; a dynamic signature parameter determining module 303, configured to determine, after it is determined that the terminal device that sends the signature authentication request is a contaminated device, a dynamic signature parameter that needs to be used for current signature authentication, a verification restart module 304, configured to re-authorize the terminal device to enable verification permissions, and notify the terminal device to collect the dynamic signature parameter; and a re-authentication execution module 305, configured to receive a value of the dynamic signature parameter that is sent by the terminal device, and perform signature authentication based on the value of the dynamic signature parameter.

In one or more embodiments of the apparatus in this specification, the determining module 302 is configured to: obtain model information of the terminal device or version information that is carried in the signature authentication request; determine whether the obtained model information of the terminal device or the version information can be found in a pre-obtained blacklist; and if yes, determine that the terminal device that sends the signature authentication request is a contaminated device.

In one or more embodiments of the apparatus in this specification, the dynamic signature parameter determining module 303 is configured to select, from a predetermined dynamic signature parameter library by using a random selection method or a one-by-one selection method, the dynamic signature parameter that needs to be used for the current signature authentication.

In one or more embodiments of the apparatus in this specification, the dynamic signature parameter library includes a fingerprint ID, a device ID, an APP package name, a service scenario, and a user ID.

In one or more embodiments of the apparatus in this specification, the dynamic signature parameter library includes a parameter associated with a service.

In one or more embodiments of the apparatus in this specification, a parameter sequence number is correspondingly set for each parameter in the dynamic signature parameter library. The verification restart module 304 is configured to send a notification message to the terminal device, where a first field in the notification message includes a parameter sequence number corresponding to the dynamic signature parameter that needs to be used for the current signature authentication, and a second field in the notification message is used to indicate a length of the first field.

It is worthwhile to note that the above-mentioned apparatuses are generally implemented on a server side, and can be separately disposed on independent servers, or a combination of some or all of the apparatuses can be disposed on a same server. The server can be a single server, or can be a server cluster including multiple servers. The server can be a cloud server, also referred to as a cloud computing server or a cloud host, and is a host product in a cloud computing service system. The above-mentioned apparatuses can be further implemented in a computer terminal with a strong computing capability.

One or more embodiments of this specification provide a computer-readable storage medium. The computer-readable storage medium stores a computer program. When the computer program is executed on a computer, the computer is enabled to perform the method according to any one of the embodiments of this specification.

One or more embodiments of this specification provide a computing device, including a memory and a processor. The memory stores executable code, and when executing the executable code, the processor implements the method according to any one of the embodiments of this specification.

It can be understood that the structure shown in the embodiments of this specification constitutes no specific limitation on the apparatuses in the embodiments of this specification. In some other embodiments of this specification, the above-mentioned apparatus can include more or less components than those shown in the figure, or can combine some components, or can split some components, or can have different component arrangements. The illustrated components can be implemented by hardware, software, or a combination of software and hardware.

The embodiments of this specification are described in a progressive way. For same or similar parts of the embodiments, mutual references can be made to the embodiments. Each embodiment focuses on a difference from other embodiments. In particular, the apparatus embodiment is basically similar to the method embodiment, and therefore is described briefly. For related parts, references can be made to related descriptions in the method embodiment.

A person skilled in the art should be aware that in the previous one or more examples, functions described in this application can be implemented by hardware, software, firmware, or any combination thereof. When the functions are implemented by software, the functions can be stored in a computer-readable medium or transmitted as one or more instructions or code on the computer-readable medium.

Specific implementations described above further describe the purposes, technical solutions, and beneficial effects of this application. It should be understood that the above-mentioned descriptions are merely some specific implementations of this application and are not intended to limit the protection scope of this application. Any modification, equivalent replacement, or improvement made based on the technical solutions of this application shall fall within the protection scope of this application.

## Claims

1. A signature authentication method, applied to a server, wherein the server performs signature authentication on a terminal device, and in the signature authentication method, a service private key required for signature authentication is embedded in a trusted execution environment (TEE) of the terminal device in advance, the TEE verifies a biological feature entered by a user, and after the verification succeeds, the TEE completes a signature required by a signature authentication request; and the method comprises:
receiving a signature authentication request sent by the terminal device;
determining whether the terminal device that sends the signature authentication request is a contaminated device;
in response to determining that the terminal device that sends the signature authentication request is a contaminated device, determining a dynamic signature parameter that needs to be used for the current signature authentication;
re-authorizing the terminal device to enable verification permissions, and notifying the terminal device to collect the dynamic signature parameter;
receiving a value of the dynamic signature parameter that is sent by the terminal device; and
performing signature authentication based on the value of the dynamic signature parameter.

2. The method according to claim 1, wherein the determining whether the terminal device that sends the signature authentication request is a contaminated device comprises:
obtaining model information of the terminal device or version information that is carried in the signature authentication request; and
determining whether the obtained model information of the terminal device or version information of a protocol used by the signature can be found in a pre-obtained blacklist, and if yes, determining that the terminal device that sends the signature authentication request is a contaminated device.

3. The method according to claim 1, wherein the determining a dynamic signature parameter that needs to be used for the current signature authentication comprises:
selecting, from a predetermined dynamic signature parameter library by using a random selection method or a one-by-one selection method, the dynamic signature parameter that needs to be used for the current signature authentication.

4. The method according to claim 3, wherein the dynamic signature parameter library comprises:
a fingerprint ID, a device ID, an application APP package name, a service scenario, and a user ID.

5. The method according to claim 3, wherein the dynamic signature parameter library comprises a parameter associated with a service.

6. The method according to claim 1, wherein the method further comprises: setting a corresponding parameter sequence number for each parameter in the dynamic signature parameter library; and
the notifying the terminal device to collect the dynamic signature parameter comprises: sending a notification message to the terminal device, wherein a first field in the notification message comprises a parameter sequence number corresponding to the dynamic signature parameter that needs to be used for the current signature authentication, and a second field in the notification message is used to indicate a length of the first field.

7. A signature authentication apparatus, applied to a server and used by the server to perform signature authentication on a terminal device, wherein a service private key required for signature authentication is embedded in a trusted execution environment (TEE) of the terminal device in advance, the TEE verifies a biological feature entered by a user, and after the verification succeeds, the TEE completes a signature required by a signature authentication request; and the signature authentication apparatus comprises:
an authentication request receiving module, configured to receive a signature authentication request sent by the terminal device;
a determining module, configured to determine whether the terminal device that sends the signature authentication request is a contaminated device;
a dynamic signature parameter determining module, configured to determine, after it is determined that the terminal device that sends the signature authentication request is a contaminated device, a dynamic signature parameter that needs to be used for the current signature authentication;
a verification restart module, configured to re-authorize the terminal device to enable verification permissions, and notify the terminal device to collect the dynamic signature parameter; and
a re-authentication execution module, configured to receive a value of the dynamic signature parameter that is sent by the terminal device; and perform signature authentication based on the value of the dynamic signature parameter.

8. The apparatus according to claim 7, wherein the verification restart module is configured to send a notification message to the terminal device, wherein a first field in the notification message comprises a parameter sequence number corresponding to the dynamic signature parameter that needs to be used for the current signature authentication, and a second field in the notification message is used to indicate a length of the first field.

9. A computer-readable storage medium, wherein the computer-readable storage medium stores a computer program, and when the computer program is executed on a computer, the computer is enabled to perform the method according to any one of claims 1 to 6.

10. A computing device, comprising a memory and a processor, wherein the memory stores executable code, and when executing the executable code, the processor implements the method according to any one of claims 1 to 6.
